# FASCICULE DE BREVET EUROPEEN

(11) **EP 2 430 244 B1**
(45) Date de publication et mention de la délivrance du brevet: **13.02.2013**
(21) Numéro de dépôt: 10728753.4
(22) Date de dépôt: 12.05.2010
(51) Int. Cl.: E02D 5/80, E04H 12/22, E02D 5/54

(54) **PIEU D'ANCRAGE**
BODENANKER
GROUND ANCHOR

(30) Priorité: 12.05.2009 FR 0953123
(43) Date de publication de la demande: 21.03.2012
(73) Titulaire: Cotillon, Jean-Louis, 37270 Montlouis sur Loire (FR)
(72) Inventeur: Cotillon, Jean-Louis, 37270 Montlouis sur Loire (FR)
(74) Mandataire: Aupetit, Muriel J. C.
(86) Numéro de dépôt international: PCT/FR2010/050929
(87) Numéro de publication internationale: WO 2010/130957

(56) Documents cités:
- DE-U1- 20 013 087
- US-A- 5 150 549

## Description

L'invention concerne un pieu d'ancrage de corps creux et doté d'au moins un organe d'ancrage, le pieu étant destiné à être enfoncé dans le sol par battage et maintenu ancré via l'organe d'ancrage.

On connaît des pieux dont la structure creuse loge des organes d'ancrage qui sont destinés à faire saillie hors de la structure lorsque la structure, une fois introduite dans un forage établi préalablement dans le sol, est battue. Plus particulièrement, le battage d'une tige ou tube coulissant dans la structure engendre le frappement de ou des organes d'ancrage, permettant leur sortie en dehors d'ouvertures prévues dans les parois de la structure. On peut citer en tant qu'état de la technique le brevet américain US5151549 et le modèle d'utilité allemand DE20013087 U1.

Toutefois, de tels pieux ne garantissent pas leur maintien dans n'importe quel type de sol, rocheux, caillouteux, ou constitué de terre pouvant être meuble ou non. En outre, l'ancrage n'étant pas verrouillé, il peut s'avérer inefficace au cours du temps.

Par ailleurs, ce système d'ancrage ne permet pas, une fois le pieu ancré dans le sol, un démontage du pieu et son retrait hors du sol, en vue par exemple d'une réutilisation.

L'invention a donc pour but de fournir un pieu d'ancrage dont l'ancrage est garantit ainsi que son maintien, quelle que soit d'ailleurs la nature du sol dans lequel il est rendu solidaire (roche, cailloux, terre meuble ou dure), ce pieu pouvant de plus être avantageusement démonté aisément et réutilisable.

Selon l'invention, le pieu d'ancrage comporte un corps creux d'axe longitudinal X, une tige logée dans le corps creux et apte à coulisser dans celui-ci, et au moins un organe d'ancrage destiné à être agencé en position d'ancrage sous l'effet du coulissement de la tige, et est caractérisé en ce qu'il comporte au moins deux organes d'ancrage solidaires du corps et s'étendant en position de repos parallèlement à l'axe X, et en ce que la tige comprend à sa première extrémité distale faisant saillie hors du corps creux, un organe d'écartement, à sa seconde extrémité distale opposée et faisant saillie hors du corps creux, une portion filetée.

On entend par « position de repos », la position pour laquelle les organes d'ancrage ne sont pas en position déployée, et par « position d'ancrage », la position pour laquelle les organes d'ancrage ont débuté leur déploiement ou sont en position ancrée dans le sol.

Le pieu de l'invention permet par des opérations simples de battage puis de serrage sur des organes appropriés de réaliser son ancrage.

Selon une caractéristique, la tige comporte à proximité de l'organe d'écartement et du côté de l'extrémité proximale de la tige, des moyens de poussée destinés à coopérer avec les organes d'ancrage. Ces moyens de poussée présentent l'avantage d'initier le déploiement des organes d'ancrage, ce déploiement étant poursuivi grâce à l'organe d'écartement lors du vissage de la portion filetée de la tige.

Avantageusement, les moyens de poussée sont logés entre les organes d'ancrage en position de repos, l'organe d'écartement étant agencé au-delà des organes d'ancrage lorsque ceux-ci sont en position de repos tandis qu'il est maintenu entre les organes d'ancrage lorsque ceux-ci sont en position d'ancrage.

Ainsi, le battage de la tige engendre sa descente et une percussion des moyens de poussée qui vont venir buter et appuyer sur les organes d'ancrage pour amorcer leur déploiement et leur accrochage dans le sol. Puis le serrage de la portion filetée engendre la remontée de l'organe d'écartement qui permet d'ouvrir et déployer davantage les organes d'ancrage et engendrer une plus grande pénétration dans le sol.

En outre, l'organe d'écartement permet une fois les organes d'ancrage déployés de garantir le maintien des organes d'ancrage en position d'ancrage par un éventuel soutènement de ceux-ci.

Selon une variante de réalisation, les moyens de poussée sont mobiles et formés par une pièce de poussée coulissant librement autour de la tige entre la première extrémité distale de la tige et une butée de la tige, la pièce présentant de préférence une forme adaptée à la pénétration, telle qu'un profil en flèche.

Avantageusement, l'organe d'écartement comporte une extrémité libre de forme appropriée à l'enfoncement, et une extrémité opposée pourvue d'un évidement de forme adaptée à loger les moyens de poussée. En effet, lors de la remontée de l'organe d'écartement, l'évidement va permettre d'accueillir les moyens de poussées qui ne sont plus utiles et d'assurer une ascension au plus proche de l'extrémité du corps creux pour favoriser un écartement maximal des organes d'ancrage.

Selon une autre variante de réalisation, les moyens de poussée sont fixes, de dimensions inférieures à celles de l'organe d'écartement et coopèrent en position de repos avec des évidements de forme complémentaire établis respectivement dans chacun des organes d'ancrage.

De préférence, l'organe d'écartement comprend des zones de soutènement, en particulier sous la forme de profils bombés ou à arêtes droites par une forme en losange de l'organe d'écartement, destinées à s'appuyer contre les organes d'ancrage en position d'ancrage.

Les organes d'ancrage sont disposés en position de repos, en dehors du corps et fixés par pivotement à l'une des extrémités dudit corps destinée à être enfoncée dans le sol, par des moyens de fixation appropriés.

Chaque organe d'ancrage forme avantageusement une jambe dont une extrémité est solidaire par pivotement du corps et l'extrémité opposée est dotée d'un pied d'ancrage qui présente d'une part une terminaison dont la partie externe est adaptée à assurer un ancrage, et d'autre part, un talon pourvu d'un bossage dont le sommet est dirigé vers l'axe X et fournissant une portion supérieure interne en creux destinée à coopérer avec les moyens de poussée.

On entend par « interne » dans la suite de la description, le qualificatif d'un élément tourné en direction de l'axe X, vers l'intérieur du pieu, tandis que « externe» s'entend par le qualificatif contraire, c'est-à-dire tourné à l'opposée du pieu, vers les parois du trou formé pour y enfoncer le pieu.

Selon une autre caractéristique, la tige comporte, agencé à l'intérieur du corps creux, un épaulement destiné à recevoir en appui un outil pour le battage du pieu.

Pour le serrage de la portion filetée, le pieu comporte un écrou et une platine, la platine étant posée contre l'extrémité du corps creux tandis que l'écrou est destiné à être serré autour de la portion filetée de la tige et contre ladite platine.

En outre, le pieu peut comprendre des moyens destinés à fermer les organes d'ancrage lorsque ceux-ci sont en position d'ancrage et permettre l'extraction du pieu.

Enfin, le pieu est utilisé pour supporter et maintenir un équipement, en particulier un capteur solaire.

Le pieu de l'invention permet grâce à sa qualité d'ancrage de résister à de fortes contraintes extérieures environnementales telles que des vents violents, y compris des cyclones. Il peut ainsi servir à supporter des équipements lourds et fragiles, tels que des capteurs solaires.

Faciles de mise en place, les pieux de l'invention permettent en outre de gagner en temps de main d'oeuvre pour installer les équipements qu'ils supporteront, et également en coût de fabrication et de livraison par rapport à d'autres systèmes de support, tels qu'actuellement des dalles en béton pour les capteurs solaires. En effet, une dalle en béton présente l'inconvénient de monopoliser de très nombreux camions pour livrer les tonnes de béton nécessaires alors que quelques camions suffiront à livrer les pieux. La dalle nécessitera plusieurs phases de fabrication étalées dans le temps sur plusieurs semaines (coffrage, ferraillage, coulage du béton, séchage), alors que l'invention ne demandera que quelques jours de mise en oeuvre.

Dans la suite de la description, les expressions utilisant les termes « intérieur » et « extérieur » sont relatives à ce qui est dans le sol et respectivement hors du sol, et celles employant les termes « inférieur » et « supérieur » sont relatives à des qualificatifs d'éléments qui sont agencés de manière verticale.

La présente invention est maintenant décrite à l'aide d'exemples uniquement illustratifs et nullement limitatifs de la portée de l'invention, et à partir des illustrations ci-jointes, dans lesquelles :
- La figure 1 représente un vue en coupe du sol dans lequel est enfoncé le pieu sans y être ancré;
- La figure 2 est une vue en coupe transversale et partielle selon la hauteur du pieu ;
- La figure 3 est une vue de côté de la tige logée dans le corps du pieu ;
- La figure 4 est une vue partielle en perspective du pieu ;
- Les figures 5a et 5b sont des vues de côté de pièces constitutives du pieu ;
- La figure 6 est une vue en perspective d'une autre pièce constitutive du pieu ;
- La figure 7a est une vue en perspective et éclatée d'une partie du pieu ;
- Les figures 7b et 7c sont des vues de détail et en coupe d'une partie du pieu ;
- La figure 8 est une vue en coupe du sol dans lequel est implanté le pieu lors du battage du pieu ;
- La figure 9 est une vue en coupe transversale du pieu ancré dans le sol ;
- La figure 10 est une variante d'ancrage de la figure 9 ;
- La figure 11 est une vue partielle de côté du pieu portant un équipement;
- La figure 12 est une vue en coupe du pieu destiné à être retiré du sol après avoir été utilisé ;
- La figure 13 est une vue partielle schématique d'une variante de la partie du pieu permettant l'ancrage.

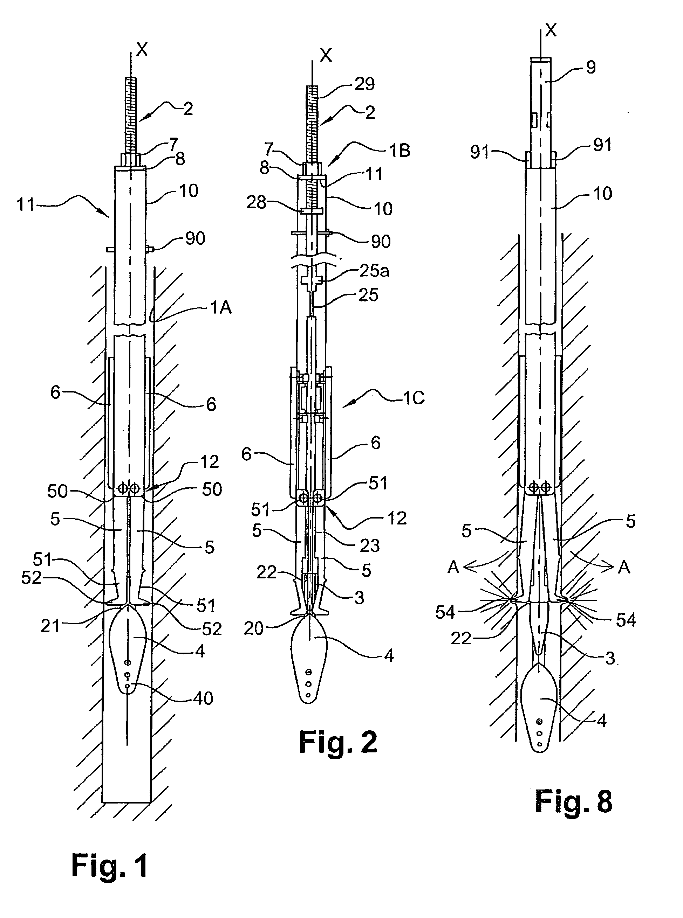

La figure 1 illustre un pieu d'ancrage 1 enfoncé dans un trou ou forage 1 A d'un sol sans y être encore ancré. Il est par exemple destiné au soutien et à la fixation d'un support sur lequel est agencé un panneau solaire.

La figure 2 illustre en coupe, ce pieu selon certaines parties de sa longueur, une première partie 1B d'extrémité destinée à être en dehors du sol et une seconde partie 1C d'extrémité opposée destinée à être logée vers le fond du forage. La partie intermédiaire non illustrée s'étendant selon la profondeur du forage présente des caractéristiques similaires à celles correspondant à la jonction de la partie 1 B.

Le pieu 1 comporte un corps creux ou fût 10 d'axe longitudinal X, un élément allongé 2 du type tige apte à coulisser à l'intérieur du fût et présentant une portion d'extrémité en saillie 29 filetée, une pièce de poussée 3, mobile par coulissement sur la tige 2, un organe d'écartement 4 dit « écarteur » et solidaire de l'extrémité de la tige tournée vers le sol, deux jambes d'ancrage 5 fixées au fût, et de manière optionnelle mais préférée des moyens 6 de fermeture des organes d'ancrage et autorisant l'extraction du pieu, dits « extracteurs » et agencées sur la paroi extérieure du fût.

Les pièces constitutives de l'ensemble du pieu sont métalliques et peuvent être galvanisées.

Le pieu 1 tel qu'illustré sur la figure 1 est planté dans le sol par l'une de ses extrémités 1C portant les jambes d'ancrage 5 tandis que son autre extrémité distale 1B opposée dépasse du sol.

Le fût 10 présente une forme de préférence parallélépipédique pour une commodité de fabrication. Il s'étend sur une longueur adaptée à assurer l'ancrage du pieu dans le sol, tout en dépassant du sol pour assurer sa fonction de support. Il mesure par exemple 2,70 m. Le pieu est introduit dans le forage 1 A sans y être complètement enfoncé, c'est-à-dire sans arriver en butée contre le fond du forage, afin d'en faciliter si besoin ultérieurement son extraction. Ainsi, il reste par exemple une hauteur de 50 cm entre le fond du forage et l'extrémité inférieure du pieu.

Le fût illustré sur la figure 2 comporte à son extrémité distale 1 B destinée à être extérieure au forage, une ouverture 11 au niveau de laquelle la tige 2 est en saillie, tandis que sont fixées à l'extrémité opposée 12, destinée à être intérieure au forage, les organes d'ancrage 5.

Le fût accueille ainsi la tige 2 qui est destinée à être translatée dans un sens descendant par une opération de battage sur celle-ci. A noter que le jeu existant entre les parois intérieures du fût 10 et la tige 2 est adapté pour un coulissement libre de la tige.

La descente de la tige commande la translation de la pièce de poussée 3 qui à son tour actionne le déploiement des organes d'ancrage 5, tandis que l'organe d'écartement 4 est destiné à descendre vers le fond du trou. Une fois que les organes d'ancrage 5 sont fermement implantés, le serrage autour de la portion filetée 29 (à l'extrémité distale de la tige 2) autorise la remontée de la tige 2, l'organe d'écartement 4 solidaire de celle-ci l'accompagnant dans son mouvement et étant destiné à continuer le déploiement des organes d'ancrage 5.

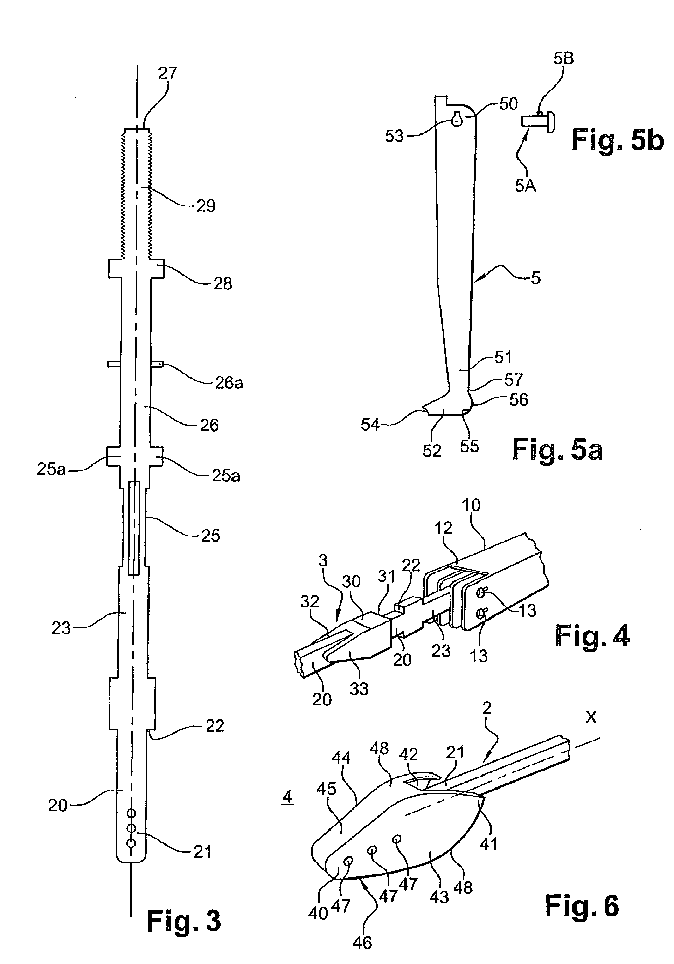

La tige 2 telle que visible sur la figure 3 comprend trois parties successives, en partant de l'extrémité destiné à être la plus proche du fond de trou, à savoir :
- Une première partie 20 délimitée par une extrémité libre 21 sur laquelle est destiné à être fixé l'organe d'écartement 4, et une butée 22 contre laquelle est destinée à venir en appui la pièce de poussée 3 apte à coulisser librement autour de ladite première partie 20 de la tige.
- Une deuxième partie 23 qui est comprise entre la butée 22 et deux ergots 25a agencés de manière opposée par rapport à l'axe X, et s'étend en regard des organes d'ancrage 5 et des extracteurs 6, ainsi qu'au-delà desdits extracteurs. A proximité immédiate des ergots 25a est agencé un étranglement longitudinal 25 dont la fonction sera vue plus loin.
- Une troisième partie 26 comprise entre les ergots 25a et son extrémité libre 27. Cette partie est dotée d'un épaulement 28 destiné à servir d'appui pour l'outil de battage qui permettra de faire descendre la tige par coulissement dans le fût 10. Elle comporte en outre une portion filetée 29 s'étendant depuis l'épaulement 28 jusqu'à l'extrémité libre 27. Le filetage est destiné à fournir la remontée de la tige par serrage d'un écrou 7 (figure 2) contre une platine 8 qui est plaquée contre l'ouverture 11 du fût. Un élément périphérique additionnel 26a permet avantageusement de réduire la longueur de flambage auquel est soumise la tige.

Un outil de battage du type mouton (représenté qu'en figure 8 sous la référence 9), de forme oblongue et creuse, est destiné à être introduit à l'intérieur du fût et autour de la portion fileté 29 et à reposer contre l'épaulement 28. En frappant son extrémité sortante à l'aide d'une masse ou d'un marteau pneumatique (non représentés), l'outil permet de faire coulisser la tige 2 à l'intérieur du fût.

En référence à la figure 4 qui illustre la jonction des première et deuxième parties 20 et 23 de la tige, la pièce de poussée 3 est apte à coulisser librement autour de la partie 20 de la tige 2. Cette pièce, à la manière d'un pointeau qui serait évidé axialement, présente une base 30 à fond 31 plat destiné à heurter la butée 22 de la tige et deux facettes 31 et 32 chaussant deux côtés respectifs de la tige et ayant un profil sensiblement triangulaire dont la pointe 33 est dirigée vers l'organe d'écartement 4. En position de repos du pieu (figure 2) pour laquelle les jambes 5 sont repliées et non escamotées, la pièce 3 est agencée entre les jambes d'ancrage 5.

Lors du déplacement de la tige 2 par battage, la butée 22 percute le fond 31 de la pièce qui à son tour se déplace en direction de l'extrémité 21 de la tige portant l'organe d'écartement 4 pour rencontrer l'extrémité des jambes d'ancrage 5 et assurer par ce battage leur écartement.

En position inopérante du pieu d'ancrage, telle qu'illustrée sur la figure 1, les jambes d'ancrage 5 sont fermées, ou encore repliées, et s'étendent parallèlement à l'axe X dans le prolongement du fût 10. Elles sont de forme identique et sont positionnées de manière symétrique par rapport à l'axe X. Chaque jambe 5, comporte une extrémité proximale supérieure 50 fixée de manière pivotante à l'extrémité 12 du fût par des moyens de fixation 5A, et une extrémité inférieure distale 51 pourvue d'un pied d'ancrage 52.

De manière plus détaillée sur les figures 5a et 5b, l'extrémité 50 d'une jambe 5 comprend pour sa fixation un alésage 53 destiné à coopérer avec un alésage correspondant 13 (figure 4) établi dans la paroi du fût en son extrémité 12, les alésages devant recevoir les moyens de fixation 5A. Les moyens de fixation 5A sont par exemple du type axe à ergot 5B, l'axe s'engageant dans les alésages 53 et 13, et l'ergot 5B coopérant avec des gorges respectives 54 et 14 associées aux alésages.

Les jambes 5 sont ainsi montées : elles sont positionnées perpendiculairement à l'axe X tout en mettant en regard les alésages et les gorges des jambes et du fût, puis l'axe 5A est introduit dans les alésages respectifs, et enfin les jambes sont pivotées angulairement et amenées parallèlement à l'axe X de sorte que, l'ergot 5B n'étant plus en face des alésages 53 des jambes, il devient impossible de démonter les jambes. En outre, comme en position d'ancrage, les jambes ne parviendront jamais à former entre elles un angle plat, elles ne peuvent pas être désassemblées.

D'autres variantes de fixation peuvent être envisagées. Toutefois, celle décrite ci-dessus reste préférée car elle permet aisément de remplacer, en particulier directement sur le chantier, les jambes d'ancrage 5 par des jambes de section ou de forme différentes.

L'extrémité inférieure 51 de chaque jambe 5 comporte un pied d'ancrage 52 qui assure l'implantation de la jambe dans le sol. Ce pied comprend ainsi, agencée à l'opposé de l'axe X et tournée vers l'extérieur du pieu, une extrémité 54 appropriée aux fonctions d'ancrage et d'accrochage. En outre, le talon 55 du pied opposé à l'extrémité 51 présente avantageusement un bossage 56 formant avec la ligne intérieure de la jambe, un creux 57 destiné à coopérer avec la pointe 33 de la pièce de poussée 3 de manière à faciliter l'action de frappe de la pièce pour écarter les jambes.

Lors du transport et/ou de la manipulation du pieu, pour éviter l'ouverture des jambes d'ancrage, il est prévu des moyens appropriés de maintien en position fermées des jambes.

La figure 6 illustre l'écarteur 4 fixé à l'extrémité libre 21 de la tige et destiné à maintenir l'écartement des jambes 5.

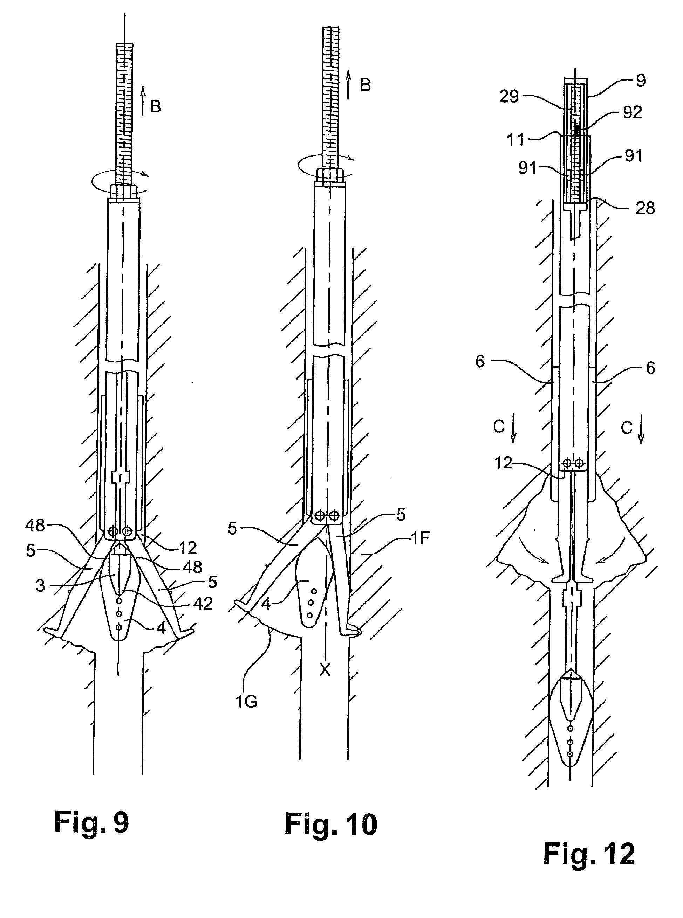

L'écarteur 4 présente une extrémité en pointe 40 d'ancrage apte à faciliter la pénétration du pieu dans le sol en vue de son extraction comme il sera explicité plus loin, et une extrémité opposée 41 pourvue d'un évidement 42 s'étendant en direction de la pointe 40. La forme de l'évidement 42 est adaptée à accueillir la pièce de poussée 3 telle que visible sur la figure 9, lors de la phase de serrage de l'écrou 7 entraînant la remontée de la tige 2.

L'écarteur 4 comprend deux facettes planes principales en regard 43 et 44 connectées par deux parois latérales en vis-à-vis, respectivement 45 et 46. La fixation de l'écarteur à la tige 2 est réalisée par exemple par des moyens de vissage 47 traversant la tige et les facettes 43 et 44.

Les parois latérales 45 et 46 présentent à proximité de l'extrémité 41 et de manière symétrique par rapport à l'axe médian et longitudinal de l'écarteur prolongeant l'axe X, une zone de soutien 48 ayant par exemple une forme bombée, sur laquelle sont destinées à s'appuyer les parois intérieures des jambes d'ancrage 5 comme illustré sur la figure 9. Cette configuration garantit le maintien de l'arc-boutant des jambes d'ancrage.

Enfin, en référence à la figure 12, le pieu comprend avantageusement des extracteurs 6 qui ont pour fonction de fermer les jambes d'ancrage 5 en les ramenant en position de repos en vue d'extraire le pieu du sol. Un exemple de réalisation est décrit ci-après.

Ces extracteurs 6 forment des plaques coulissantes qui s'étendent parallèlement à l'axe X sur la paroi externe du corps creux 10, à proximité de l'extrémité 12 sans en dépasser lorsque le pieu est prêt à être utilisé ou est en position d'ancrage.

Les extracteurs 6 sont plaqués contre la paroi du corps 10 sur deux côtés opposés, et sont aptes à être mobiles en translation parallèlement à l'axe X en direction des jambes 5.

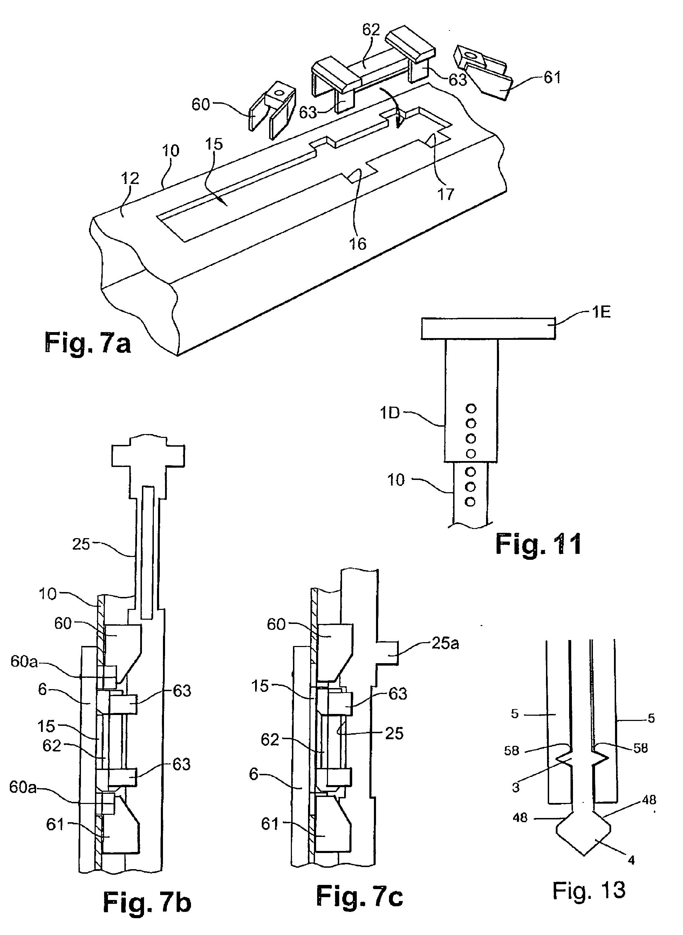

L'association des extracteurs 6 au corps 10 est à titre d'exemple réalisé de la manière suivante. Les extracteurs sont supportés et fixés respectivement sur chaque côté du corps, par des éléments de guidage 60 et 61 illustrés sur la figure 7a, ces éléments étant aptes à coulisser dans une glissière 15 du corps 10 pour la mobilité desdits extracteurs. Les éléments 60 et 61 sont insérés dans la glissière 15 via des ouvertures ou fenêtres 16 et respectivement 17 et sont solidarisés en particulier par vissage sur la face interne des extracteurs..

Afin de bloquer les extracteurs lorsqu'ils n'ont pas besoin d'être utilisés, une clé de verrouillage 62 est avantageusement prévue. Cette clé se présente sous forme d'un élément longitudinal et comporte des pattes 63 s'insérant dans les fenêtres respectives 16 et 17, une fois les éléments de guidage introduits dans la glissière. Les plaques des extracteurs sont rapportées par-dessus la clé 62 et boulonnées en 60a aux éléments de guidage 60 et 61 comme visible sur la figure 7b.

Les figures 7b et 7c illustrent des vues de détail de la coopération de la clé de verrouillage 62 avec la tige 2 selon un des côtés du pieu. En position de repos du pieu (figure 7b) lorsque celui-ci n'a pas encore été utilisé ou est en position d'ancrage, la tige 2 est descendue à une hauteur telle que l'étranglement 25 soit positionné au-dessus de la clé 62. La clé 62 est logée librement dans la glissière 15 sans toutefois pouvoir se déplacer, car l'espace entre la tige 2 et la paroi du fût est insuffisant pour son insertion totale à l'intérieur du fût. Ne pouvant se mouvoir, la clé empêche tout mouvement des éléments de guidage 60 et 61 et par conséquent toute translation des extracteurs.

En revanche, lorsqu'il s'agit de démonter le pieu par une opération de battage (le principe sera détaillé plus loin), l'étranglement 25 tel que visible sur la figure 7c est destiné à être mis en regard de la clé. La clé 62 a alors suffisamment d'espace entre la glissière 15 et l'étranglement 25 pour s'inscrire selon toute son épaisseur à l'intérieur du fût. La clé ne s'opposant plus au verrouillage des éléments de guidage 60 et 61, ces derniers coulissent vers la partie inférieure du pieu, engendrant par conséquent le déplacement des extracteurs 6. Les extracteurs en descendant viennent recouvrir les jambes 5, les forçant à se refermer, de sorte que le pieu peut être extrait.

D'autres variantes de moyens de fermeture des jambes et extracteurs sont envisageables. Par exemple, l'extracteur pourrait être un simple cylindre qui coulisserait en venant en appui sur la partie supérieure des jambes, assurant leur fermeture.

Le fonctionnement du pieu d'ancrage de l'invention est à présent décrit.

Le forage d'un trou est réalisé d'un diamètre supérieur au diamètre du pieu et d'une hauteur telle qu'elle soit supérieure, par exemple de 0,5 m, à l'encombrement total du pieu dans ce forage.

Le pieu est introduit dans le trou tel que visible sur la figure 1. Afin de limiter la pénétration du pieu dans le sol, une cale d'appui non illustrée est agencée autour du pieu au niveau de l'ouverture du trou.

La platine 8 et l'écrou 7 sont retirés afin d'avoir accès à l'intérieur du corps creux 10. Lors de cette opération, la tige 2 peut descendre. Afin de limiter cette descente, une pièce 90 telle que visible sur la figure 2 est positionnée transversalement au fût et contre laquelle vient s'appuyer l'épaulement 28.

Un mouton est ensuite disposé autour de la portion filetée 29 en saillie et introduit dans le corps 10 du pieu pour s'appliquer contre l'épaulement 28.

Tel qu'illustré sur la figure 8, on procède alors au battage du mouton pour faire descendre la tige en direction du fond du trou. Afin de limiter la hauteur de descente de la tige et contrôler au final la hauteur de battage, le mouton comporte une butée d'arrêt 91 qui lorsqu'elle arrive en appui contre l'ouverture du fût indique la fin de l'opération de battage.

En frappant la tige 2, celle-ci coulisse dans le fût, transmettant son mouvement à la pièce de poussée 3 qui est percutée par la butée 22. La pièce 3 rencontre à son tour via sa pointe 33, les creux 57 des talons des jambes d'ancrage, poussant ainsi les jambes dans une direction opposée à l'axe X selon les flèches A de la figure 8 et engendrant la pénétration des pieds d'ancrage 54 dans le sol.

Lorsque les pieds d'ancrage ont réussi à s'accrocher dans le sol, on retire le mouton, on replace la platine 8 et l'écrou 7 (figure 9), et on procède au serrage, ce qui fait remonter la tige 2 selon la flèche B de la figure 9, entraînant le déploiement progressif des jambes d'ancrage 5 et par conséquent une pénétration plus profonde dans le sol.

La hauteur de remontée de la tige 2 est fonction de la nature du sol ; elle est par exemple comprise entre 180 et 600 mm. Cette hauteur correspond à un couple de serrage dont la grandeur est adaptée et suffisante pour assurer un écartement suffisant des jambes d'ancrage et fournir l'ancrage idoine du pieu.

La tige 2 en remontant entraîne la remontée de l'organe d'écartement 4 vers l'extrémité 12 du fût, la pièce de poussée 3 se logeant idéalement dans l'évidement 42 de l'organe 4. En remontant, l'organe 4 rencontre les parois internes des jambes 5 et les jambes peuvent ainsi reposer sur les zones de soutien bombées 48, tel qu'illustré sur la figure 9.

La figure 10 illustre l'ancrage du pieu après serrage avec une nature du sol différente de chaque côté des jambes d'ancrage, par exemple de la roche 1 F et à l'opposé de la terre 1 G. La pénétration des jambes est donc différente, avec un enfoncement plus important pour la terre que pour la roche, la jambe ancrée dans la terre présentant un angle d'écartement avec l'axe X plus grand que l'angle de la jambe opposée rentrant dans la roche.

Par conséquent, le pieu permet par l'invention d'être planté et ancré fermement dans le sol sans risque de fermeture des jambes d'ancrage. En effet, le serrage est arrêté à un couple suffisant pour garantir un minimum d'écartement des jambes, ce degré d'écartement des jambes d'ancrage et le soutènement, éventuellement que partiel, des jambes par l'organe d'écartement 4, garantit aux jambes d'être maintenues écartées et assure ainsi la stabilité du pieu grâce à la pression du sol s'exerçant sur celles-ci et à l'organe 4 qui empêche leur fermeture.

Une fois le pieu en place et ancré, l'élément 90 est retiré puisque le pieu ne risque plus de s'enfoncer, ainsi que la cale. On peut procéder à la mise en place d'un équipement 1 E sur la tête du pieu, telle que visible sur la figure 11. Un chapeau 1 D vient coiffer le pieu par une coopération par vissage, et en proposant de préférence une série d'orifices sur une certaine hauteur du corps du pieu pour régler la hauteur d'agencement de l'équipement 1 E. Cet équipement 1 E est par exemple un panneau solaire.

L'invention permet également de démonter le pieu, même plusieurs années après son ancrage.

Il est alors nécessaire de dévisser l'écrou 7 et d'ôter la platine 8. En regard de la figure 12, un outil de battage tel que le mouton 9 déjà utilisé est introduit à l'intérieur du fût 10 jusqu'à prendre appui sur l'épaulement 28. Le mouton 9 comporte avantageusement, outre les premières butées inférieures 91, des secondes butées d'arrêt 92 positionnées d'une part à une hauteur supérieure auxdites premières butées 91, et d'autre part perpendiculairement à celles-ci. En tournant le mouton par rapport à la position qu'il avait sur la figure 8 en vue de l'ancrage du pieu, ledit mouton peut être introduit dans le fût de sorte que les premières butées 91, telles qu'illustrées sur la figure 12, sont également insérées à l'intérieur du fût sans gêner le battage. Le battage peut alors être effectué jusqu'à ce que les secondes butées 92 arrivent en appui contre l'ouverture 11 du fût.

Le battage de la tige 2 engendre son coulissement et la translation vers le bas de l'ergot périphérique 25a et de l'étranglement 25. L'ergot 25a vient alors percuter les éléments de guidage supérieurs 61, forçant la clé 62 à quitter son logement et à s'inscrire dans l'étranglement 25, autorisant la descente des extracteurs 6 selon la flèche C de la figure 12. Les extracteurs coulissent alors au-delà de l'extrémité inférieure 12 du fût en venant s'appuyer contre les parties supérieures des jambes 5, générant nécessairement leur fermeture. Le pieu peut alors être sorti.

A noter que lors de la descente de la tige 2, l'organe d'écartement 4 est également translaté et dirigé vers le fond du trou, ce qui ne pose pas de problème puisqu'il avait été prévu lors de l'installation du pieu, un forage de profondeur plus importante à la hauteur d'enfoncement du pieu dans le sol. De plus, même s'il y a eu dans le temps un effondrement partiel de la terre, celle-ci reste néanmoins meuble sous le pieu autorisant la descente de la tige 2 et la pénétration de l'organe d'écartement 4.

Des variantes de réalisation peuvent être envisagées sans sortir du cadre de l'invention, en particulier quant à la configuration de l'organe d'écartement 4 et les moyens de poussée 3.

La figure 13 illustre une telle variante en proposant des moyens de poussée 3 qui sont fixes sur la tige 2. Ces moyens de poussée sont de dimensions inférieures à celles de l'organe d'écartement 4. Ils présentent ici une forme sensiblement similaire selon un facteur homothétique. En outre, chaque organe d'ancrage ou jambe 5 comporte dans sa partie interne en regard de l'autre jambe, un évidement 58 de forme complémentaire aux moyens de poussée 3 et constituant un logement pour ces dits moyens en position de repos du pieu.

Par ailleurs, la forme de l'organe d'écartement 4 est du type sensiblement en losange, les arêtes de la partie supérieure du losange (celles proches des moyens de poussée) formant les zones de soutènement 48.

Lors du battage, la translation de la tige 2 entraîne la sortie des moyens de poussée 3 hors des logements 58 des jambes 5. La butée des moyens de poussée 3 contre la face interne des jambes 5 engendre l'initialisation de l'écartement des jambes 5. Puis, la remontée de la tige 2 par serrage engendre la montée de l'organe d'écartement 4 qui est apte à s'insérer entre les jambes 5 partiellement déployées. La continuité du serrage conduit à la translation progressive de l'organe d'écartement 4 vers le corps du pieu, permettant de déployer davantage les organes d'ancrage.

## Revendications

1. Pieu d'ancrage (1) comportant un corps creux (10) d'axe longitudinal X, une tige (2) logée dans le corps creux et apte à coulisser dans celui-ci, et au moins un organe d'ancrage (5) destiné à être agencé en position d'ancrage sous l'effet du coulissement de la tige, **caractérisé en ce qu'**il comporte au moins deux organes d'ancrage (5) solidaires du corps (10) et s'étendant en position de repos parallèlement à l'axe X, et la tige (2) comprend à sa première extrémité distale (21) faisant saillie hors du corps creux, un organe d'écartement (4), à sa seconde extrémité distale opposée et faisant saillie hors du corps creux, une portion filetée (29).

2. Pieu selon la revendication 1, **caractérisé en ce que** la tige (2) comporte à proximité de l'organe d'écartement (4) et du côté de l'extrémité proximale de la tige, des moyens de poussée (3) destinés à coopérer avec les organes d'ancrage (5).

3. Pieu selon la revendication 1 ou 2, **caractérisé en ce que** les moyens de poussée (3) sont logés entre les organes d'ancrage (5) en position de repos, l'organe d'écartement (4) étant agencé au-delà des organes d'ancrage (5) lorsque ceux-ci sont en position de repos tandis qu'il est maintenu entre les organes d'ancrage lorsque ceux-ci sont en position d'ancrage.

4. Pieu selon l'une des revendications précédentes, **caractérisé en ce que** les moyens de poussée (3) sont mobiles et formés par une pièce de poussée coulissant librement autour de la tige (2) entre la première extrémité distale (21) de la tige et une butée (22) de la tige, la pièce présentant de préférence une forme adaptée à la pénétration, telle qu'un profil en flèche.

5. Pieu selon la revendication 4, **caractérisé en ce que** l'organe de d'écartement (4) comporte une extrémité libre (40) de forme appropriée à l'enfoncement, et une extrémité opposée (41) pourvue d'un évidement (42) de forme adaptée à loger les moyens de poussée (3).

6. Pieu selon l'une des revendications 1 à 3, **caractérisé en ce que** les moyens de poussée (3) sont fixes, de dimensions inférieures à celles de l'organe d'écartement (4) et coopèrent en position de repos avec des évidements (58) de forme complémentaire établis respectivement dans chacun des organes d'ancrage (5).

7. Pieu selon l'une quelconque des revendications précédentes, **caractérisé en ce que** l'organe d'écartement (4) comprend des zones de soutènement (48), en particulier sous la forme de profils bombés ou à arêtes droites par une forme en losange de l'organe d'écartement, destinées à s'appuyer contre les organes d'ancrage (5) en position d'ancrage.

8. Pieu selon l'une quelconque des revendications précédentes, **caractérisé en ce que** chaque organe d'ancrage (5) forme une jambe dont une extrémité (50) est solidaire par pivotement du corps (10) et l'extrémité opposée (51) est dotée d'un pied d'ancrage (52) qui présente d'une part une terminaison (54) adaptée à assurer un ancrage, et d'autre part, un talon (55) pourvu d'un bossage (56).

9. Pieu selon l'une quelconque des revendications précédentes, **caractérisé en ce que** la tige (2) comporte, agencé à l'intérieur du corps creux, un épaulement (28) destiné à recevoir en appui un outil pour le battage du pieu.

10. Pieu selon l'une quelconque des revendications précédentes, **caractérisé en ce qu'**il comporte un écrou (7) et une platine (8), la platine (8) étant posée contre l'extrémité du corps creux tandis que l'écrou est destiné à être serré autour de la portion filetée (2) de la tige et contre ladite platine.

11. Pieu selon l'une quelconque des revendications précédentes, **caractérisé en ce qu'**il comprend des moyens (6) destinés à fermer les organes d'ancrage (5) lorsque ceux-ci sont en position d'ancrage.

12. Pieu selon l'une quelconque des revendications précédentes, **caractérisé en ce qu'**il est utilisé pour supporter un équipement, en particulier un capteur solaire.

## Claims

1. An anchoring post (1) comprising a hollow body (10) having a longitudinal axis X, a rod (2) housed in the hollow body and capable of sliding therein, and at least one anchoring member (5) to be positioned in an anchoring position upon the sliding of the rod, **characterised in that** it includes at least two anchoring members (5) connected to the body (10), and extending parallel to the axis X in a rest position, and **in that** the rod (2) includes a spacing member (4) at the first distal end (21) thereof that protrudes from the hollow body and a threaded portion (29) at its second opposite distal end protruding from the hollow body.

2. A post according to claim 1, **characterised in that** the rod (2) includes, in the vicinity of the spacing member (4) and near the proximal end of the rod, urging means (3) designed to cooperate with the anchoring members (5).

3. A post according to claim 1 or 2, **characterised in that** the urging means (3) are housed between the anchoring members (5) in the rest position, and the spacing member (4) is positioned beyond the anchoring members (5) when these are in the rest position, while it is held between the anchoring members when they are in the anchoring position.

4. A post according to any of the preceding claims, **characterised in that** the urging means (3) are mobile and formed by an urging piece that slides freely around the rod (2) between the first distal end (21) of the rod and a stop (22) of the rod, wherein the piece is preferably shaped to improve penetration, for example with an arrow profile.

5. A post according to claim 4, **characterised in that** the spacing member (4) has a free end (40) shaped to improve driving in, and an opposite end (41) provided with a recess (42) shaped for accommodating the urging means (3).

6. A post according to any of claims 1 to 3, **characterised in that** the urging means (3) are fixed, smaller than the spacing member (4), and cooperate in the rest position with recesses (58) with complementary shapes that are made in each anchoring member (5) respectively.

7. A post according to any of the preceding claims, **characterised in that** the spacing member (4) includes supporting zones (48), in particular in the form of convex profiles or profiles with straight edges in a diamond shape of the spacing member, which are designed to press against the anchoring members (5) in the anchoring position.

8. A post according to any of the preceding claims, **characterised in that** each anchoring member (5) forms a leg, one end (50) of which is integral with and turns on the body (10) and the opposite end (51) has an anchoring foot (52) that firstly has an end (54) adapted for anchoring, and secondly a heel (55) provided with a boss (56).

9. A post according to any of the preceding claims, **characterised in that** the rod (2) comprises, on the inside of the hollow body, a shoulder (28) designed to be pressed by a tool for hammering the post.

10. A post according to any of the preceding claims, **characterised in that** it includes a nut (7) and a plate (8), wherein the plate (8) is placed against the end of the hollow body, while the nut is designed to be tightened around the threaded portion (2) of the rod, against the said plate.

11. A post according to any of the preceding claims, **characterised in that** it comprises means (6) designed to close the anchoring members (5) when they are in the anchoring position.

12. A post according to any of the preceding claims, **characterised in that** it is used to support equipment, particularly a solar collector.

## Patentansprüche

1. Bodenanker (1) mit einem Hohlkörper (10) in Längsachse X, einem im Hohlkörper gelagerten und darin gleitenden Schaft (2), und mindestens einem Verankerungsorgan (5), das dazu bestimmt ist, unter der Einwirkung des gleitenden Schafts in der Verankerungsposition angeordnet zu werden, **dadurch gekennzeichnet, dass** er mindestens zwei mit dem Hohlkörper (10) verbundene Verankerungsorgane (5) umfasst, die sich in der Ruheposition parallel zur X-Achse erstrecken, und dass der Schaft (2) an seinem ersten distalen Ende (21), das aus dem Hohlkörper heraussteht, ein Abstandsorgan (4) umfasst und an seinem zweiten, entgegengesetzten distalen Ende, das aus dem Hohlkörper heraussteht, einen Gewindeabschnitt (29) umfasst.

2. Bodenanker nach Anspruch 1, **dadurch gekennzeichnet, dass** der Schaft (2) in der Nähe des Abstandsorgans (4) und auf der Seite des proximalen Endes des Schafts Druckmittel (3) umfasst, die dazu bestimmt sind, mit den Verankerungsorganen (5) zusammenzuarbeiten.

3. Bodenanker nach Anspruch 1 oder 2, **dadurch gekennzeichnet, dass** die Druckmittel (3) in der Ruheposition zwischen den Verankerungsorganen (5) gelagert sind, wobei das Abstandsorgan (4) über den Verankerungsorganen (5) angeordnet ist, wenn diese in der Ruheposition sind, während es zwischen den Verankerungsorganen gehalten wird, wenn diese in der Verankerungsposition sind.

4. Bodenanker nach einem der vorausgehenden Ansprüche, **dadurch gekennzeichnet, dass** die Druckmittel (3) beweglich sind und aus einem Druckteil gebildet sind, das zwischen dem ersten distalen Ende (21) des Schafts und einem Anschlag (22) des Schafts frei um den Schaft (2) gleiten kann, wobei das Teil vorzugsweise eine für die Penetration geeignete Form aufweist, wie zum Beispiel ein pfeilförmiges Profil.

5. Bodenanker nach Anspruch 4, **dadurch gekennzeichnet, dass** das Abstandsorgan (4) ein freies Ende (40) mit einer zum Einsenken geeigneten Form aufweist sowie ein entgegengesetztes Ende (41) mit einer Aussparung (42), die eine zur Aufnahme der Druckmittel (3) geeignete Form aufweist.

6. Bodenanker nach einem der Ansprüche 1 bis 3, **dadurch gekennzeichnet, dass** die Druckmittel (3) feststehend sind, kleinere Dimensionen als das Abstandsorgan (4) aufweisen und in der Ruheposition mit Aussparungen (58) von komplementärer Form zusammenwirken, die jeweils in allen Verankerungsorganen (5) vorhanden sind.

7. Bodenanker nach einem der vorausgehenden Ansprüche, **dadurch gekennzeichnet, dass** das Abstandsorgan (4) Stützbereiche (48) umfasst, insbesondere in Form von gewölbten Profilen oder mit geraden Kanten durch eine Rautenform des Abstandsorgans, die dazu bestimmt sind, in der Verankerungsposition an den Verankerungsorganen (5) aufzuliegen.

8. Bodenanker nach einem der vorausgehenden Ansprüche, **dadurch gekennzeichnet, dass** jedes Verankerungsorgan (5) ein Bein bildet, dessen ein Ende (50) durch Schwenken des Körpers (10) formschlüssig verbunden ist und das entgegengesetzte Ende (51) mit einem Verankerungsfuß (52) ausgestattet ist, der zum einen ein Ende (54) aufweist, das eine Verankerung gewährleisten kann, und zum anderen einen Absatz (55) mit einer Nabe (56).

9. Bodenanker nach einem der vorausgehenden Ansprüche, **dadurch gekennzeichnet, dass** der Schaft (2) einen Vorsprung (28) umfasst, der auf der Innenseite des Hohlkörpers angebracht ist und dazu dient, ein Werkzeug zum Einschlagen des Bodenankers aufzunehmen.

10. Bodenanker nach einem der vorausgehenden Ansprüche, **dadurch gekennzeichnet, dass** er eine Mutter (7) und eine Platine (8) umfasst, wobei die Platine (8) am Ende des Hohlkörpers aufliegt, während die Mutter dazu bestimmt ist, am Gewindeabschnitt (2) des Schafts und gegen die Platine festgezogen zu werden.

11. Bodenanker nach einem der vorausgehenden Ansprüche, **dadurch gekennzeichnet, dass** er Mittel (6) zum Schließen der Verankerungsorgane (5) umfasst, wenn diese in der Verankerungsposition sind.

12. Bodenanker nach einem der vorausgehenden Ansprüche, **dadurch gekennzeichnet, dass** er zum Abstützen einer Ausrüstung, insbesondere eines Sonnenkollektors verwendet wird.
